(19) Europäisches Patentamt
European Patent Office
Office européen des brevets

(11) Veröffentlichungsnummer: **0 344 441 B1**

(12) # EUROPÄISCHE PATENTSCHRIFT

(45) Veröffentlichungstag der Patentschrift: **01.06.94**

(51) Int. Cl.[5]: **C08F 297/04**, B60C 1/00

(21) Anmeldenummer: **89106987.4**

(22) Anmeldetag: **19.04.89**

(54) **AB-Blockcopolymerisate auf Basis von Butadien, Isopren und Styrol, Verfahren zu ihrer Herstellung und ihre Verwendung.**

(30) Priorität: **03.06.88 DE 3818870**

(43) Veröffentlichungstag der Anmeldung:
**06.12.89 Patentblatt 89/49**

(45) Bekanntmachung des Hinweises auf die Patenterteilung:
**01.06.94 Patentblatt 94/22**

(84) Benannte Vertragsstaaten:
**AT BE CH DE ES FR GB IT LI LU NL SE**

(56) Entgegenhaltungen:
**EP-A- 0 302 196**
**US-A- 4 616 065**

(73) Patentinhaber: **HÜLS AKTIENGESELLSCHAFT**

**D-45764 Marl(DE)**

(72) Erfinder: **Herrmann, Christoph, Dr.**
**Siedlungsstrasse 3**
**D-4370 Marl(DE)**
Erfinder: **Hellermann, Walter, Dr.**
**Waldstrasse 16**
**D-4270 Dorsten 21(DE)**
Erfinder: **Fuchs, Hans-Bernd, Dr.**
**Leverkusener Strasse 12**
**D-4370 Marl(DE)**
Erfinder: **Nordsiek, Karl-Heinz, Dr.**
**Neumarkstrasse 4**
**D-4370 Marl(DE)**
Erfinder: **Wolpers, Jürgen, Dr.**
**Hetfeld 15 c**
**D-4358 Haltern(DE)**

**EP 0 344 441 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ungesättigte elastomere AB-Blockcopolymerisate auf Basis von Butadien, Isopren und Styrol, ihre Herstellung und ihre Verwendung zur Herstellung von Reifenlaufflächen.

Bekanntlich werden an Kautschuke, die im Reifensektor eingesetzt werden, folgende Anforderungen gestellt:

- Die Kautschuke sollen bei der Laufflächenherstellung gut verarbeitbar sein.
- Die Kautschuke sollen gut vulkanisierbar sein.
- Die Kautschuke sollen bequem herstellbar sein.

Darüber hinaus sind die Forderungen zu berücksichtigen, die sich aus ihrem Einsatzgebiet im Reifensektor ergeben. Bekanntlicherweise werden an Reifenlaufflächen in jüngster Zeit erhöhte Anforderungen gestellt:

a) Sie sollen auch bei tiefen Temperaturen noch hoch elastisch sein.

b) Sie sollen eine gute Naßrutschfestigkeit aufweisen.

c) Sie sollen einen hohen Abriebwiderstand aufweisen und dementsprechend eine lange Lebensdauer haben.

d) Sie sollen bei dynamischer Beanspruchung möglichst wenig Wärme bilden. Ihr Rollwiderstand soll möglichst klein sein, damit der Treibstoffverbrauch des Fahrzeugs möglichst niedrig ist.

Sie sollen entweder Hauptkomponente von Reifenlaufflächenmischungen sein und die vorgenannte Anforderungen von sich aus erfüllen oder Teilkomponente von Reifenlaufflächenmischungen sein und insbesondere das Kriterium der hohen Naßrutschfestikeit erfüllen, ohne das der Rollwiderstand in nennenswerter Weise beeinträchtigt ist.

Es ist bekannt, daß Kautschuke bei der Prüfung im Torsionsschwingungsversuch eine Temperaturabhängigkeit des logarithmischen Dekrementes der mechanischen Dämpfung aufweisen, die in der graphischen Darstellung einem für den jeweiligen Kautschuk charakteristischen Kurvenverlauf entspricht. Die gewünschten Anforderungen an die Reifenlaufflächen stellen sich vorzugsweise dann ein, wenn die Dämpfungskurve einen möglichst breiten Schwingungsdämpfungsbereich aufweist (vgl. K. H. Nordsiek, Kautschuk und Gummi, Kunststoffe 38, 178 (1985) und 39, 599 (1986). Dies gilt sowohl für den Fall einer Kautschukkomponente als auch für Kautschukmischungen.

Es ist auch bekannt, daß diese sich teilweise widersprechenden Eigenschaften der Reifenlaufflächen ganz wesentlich durch die Art und Zusammensetzung der zu diesem Zweck eingesetzten Kautschuke bestimmt werden. Homopolymere auf Basis der üblicherweise eingesetzten Monomeren wie Butadien, Isopren und Styrol (vgl. EP-A- 0 054 204 und JP-A-82/87 406) als auch Copolymere auf Basis zweier dieser Monomeren erfüllen diese Bedingungen noch nicht befriedigend.

Als Blöcke eines Polymeren sollen im Rahmen dieser Erfindung nicht nur die Kettensegmente angesehen werden, die aus unterschiedlichen Monomerbausteinen bestehen, sondern auch jene Segmente, die sich - bedingt durch die äußeren Verfahrensparameter - in der Art der Verknüpfung der Monomerbausteine sprunghaft unterscheiden.

Auch wenn man während der Copolymerisation von Dienen und Styrol den Styrolanteil verändert (vgl. DE-OS 31 08 583), erhält man kein Blockcopolymer, sondern fließende Übergänge. Die gewünschte Verbesserung der reifentechnischen Eigenschaften ist auch hier noch unzureichend. Die DE-OS 31 08 583 beschreibt 1-phasige Kautschuksysteme mit einem Dämpfungsmaximum, das von einem Glasübergangspunkt in einem sehr engen Temperaturbereich verursacht wird.

Eine Verbesserung wird erst dadurch erreicht, daß man ein Copolymer aus zwei unterschiedlichen Blöcken A und B herstellt, die sich in ihrer Struktur und/oder Zusammensetzung unterscheiden.

Die in der DE-PS 31 51 139 beschriebenen Kautschukmassen enthalten ein Styrol-Butadien-Blockcopolymer, dessen 2 Blöcke unterschiedliche Glasübergangstemperaturen besitzten; die Dämpfungsphase dieser Kautschukmassen zeigt nur ein Maximum. Die DE-OS 32 20 680 beschreibt ebenfalls Kautschukmassen, die ein Blockcopolymer aus einem konjugierten Diolefin und monovinylsubstituierten aromatischen Kohlenwasserstoffen enthalten, gibt aber keine Lehre, wie eine breite Dämpfungskurve erhalten werden kann. Die Kautschuke erfüllen noch nicht hinreichend die vorstehend aufgeführten Kriterien a) bis d).

Die EP-OS 0 173 791 beschreibt Laufstreifen, deren Kautschukkomponente zu 30 bis 100 % aus Blockcopolyerisaten auf Basis von Butadien, Isopren und gegebenenfalls Styrol und/oder Piperylen bestehen kann. Die Blockcopolymerisate werden in Gegenwart von Cokatalysatoren unter Erhöhung der Temperatur hergestellt und können beispielsweise AB-Struktur aufweisen. Die Polymerisate enthalten stets einen Endblock auf Basis von Butadien, der bei steigender Temperatur hergestellt wird und infolgedessen einen vergleichsweise hohen Anteil an 1,2-Struktureinheiten und eine ungleichmäßige Verteilung der Vinylgruppen aufweist. Auch die in der deutschen Patentanmeldung P 37 24 871 beschriebenen Kautschuke sind AB-Blockcopolymerisate auf Basis von Butadien, Isopren und Styrol. Beide Verfahren erscheinen umständlich, da zur Herstellung der beiden Blöcke jeweils spezielle Monomergemische zusammengestellt werden müssen.

Ziel der Erfindung war es, AB-Blockcopolymerisate auf Basis von Isopren, Butadien und Styrol zu entwickeln, die wahlweise eine Dämpfungskurve mit mehr oder weniger breitem Schwingungsdämpfungsbereich aufweisen und dementsprechend entweder als Haupt- oder als Nebenkomponente von Kautschukmischungen geeignet sind . Ein weiteres wesentliches Ziel der Erfindung war es, ein einfaches Verfahren zur Herstellung dieser AB-Blockcopolymerisate bereitzustellen.

Es wurden jetzt überraschend AB-Blockcopolymerisate auf Basis von 20 bis 75 % Butadien, 5 bis 50 % Isopren und 3 bis 30 % Styrol gefunden, wobei jeder der beiden Blöcke Einheiten aller drei Monomeren enthält. Diese bestehen zu

30 bis 90 % aus einem Block A, und zu

70 bis 10 % aus einem Block B, dessen mittlerer Vinyl- und Isopropenylgruppengehalt jeweils um mindestens 30 %, insbesondere um mindestens 45 %, höher ist als der des Blockes A.

Vorzugsweise besteht das AB-Blockcopolymerisat zu

40 bis 80 % aus dem Block A und zu

60 bis 20 % aus dem Block B.

Die Vinyl- und Isopropenylgruppen können entweder statistisch oder entlang der Kette mit zu- bzw. abnehmendem Gradienten verteilt sein. Der Anteil dieser Gruppen im Block A beträgt vorzugsweise jeweils 10 bis 30 %.

Die AB-Blockcopolymerisate können sowohl linear als auch verzweigt sein. Die Verzweigung kann mit Hilfe eines Verzweigungsmittels während der Polymerisation oder mit Hilfe eines Kupplungsmittels zu Ende der Polymerisation erreicht werden.

Das Verfahren zur Herstellung der Blockcopolymerisate durch anionische Polymerisation der Monomeren in einem inerten organischen Lösemittel in Gegenwart einer Li-organischen Verbindung ist dadurch gekennzeichnet, daß man zunächst einen Block A durch Polymerisation einer vorgegebenen Mischung der 3 Monomeren gegebenenfalls in Anwesenheit einer geringen Menge eines Cokatalysators herstellt. Danach stellt man einen Block B durch Polymerisation einer gegebenenfalls veränderten Mischung der 3 Monomeren her, indem man einen Cokatalysator zusetzt.

Gegenstand der Erfindung ist schließlich auch die Verwendung der AB-Blockcopolymerisate zur Herstellung von Reifenlaufflächen gemäß Anspruch 11.

- Die Blockcopolymerisate der Erfindung stellen wertvolle Komponenten von Kautschukmischungen für Reifenlaufflächen dar.
- Allein durch Variation der Zugabe des Cokatalysators lassen sich wahlweise Blockcopolymerisate mit mehr oder weniger breitem Maximum der Dämpfungskurve herstellen. Das Verfahren ist somit überaus einfach und flexibel.

Aus der nicht vorveröffentlichten deutschen Patentanmeldung P 37 24 871.5 sind ungesättigte, elastomere AB-Blockcopolymerisate auf Basis von Butadien, Isopren und Styrol bekannt. Der Block A besteht entweder nur aus Butadieneinheiten oder aus Butadien- und Styroleinheiten, kann aber nie alle drei Monomeren enthalten. Dies stellt ein Unterscheidungsmerkmal gegenüber der vorliegenden Anmeldung dar, bei der der Block A - ebenso wie der Block B - alle drei Monomeren enthalten muß (siehe Anspruch 1 in Verbindung mit Anspruch 6).

Im folgenden soll die Erfindung detailliert beschrieben werden. Als Reaktionsmedium wird ein inertes organisches Lösemittel verwendet. Geeignet sind insbesondere Kohlenwasserstoffe mit 6 bis 12 C-Atomen wie Pentan, Hexan, Heptan, Oktan und Dekan sowie deren cyclische Analogen. Geeignet sind auch aromatische Lösemittel wie z. B. Benzol, Toluol, Xylole u. a. Selbstverständlich können auch Gemische der vorstehend beschriebenen Lösemittel eingesetzt werden.

Als Katalysator werden Alkyllithiumverbindungen eingesetzt, die durch Umsetzung von Lithium mit den entsprechenden Alkylhalogeniden leicht zugänglich sind. Die Alkylreste weisen 1 bis 10 C-Atome auf. Einzelne Wasserstoffatome können durch Phenylreste substituiert sein. Folgende Alkyllithiumverbindungen sind besonders geeignet: Methyllithium, Ethyllithium, Pentyllithium; bevorzugt wird n-Butyllithium.

Zur Verbesserung des kalten Flusses wird wenigstens eine Polymerisationsstufe vorteilhafterweise in Anwesenheit geringer Mengen eines Verzweigungsmittels, wie z. B. Divinylbenzol (DVB), durchgeführt. Bezogen auf 100 Teile Monomere werden maximal 0,5 Teile DVB eingesetzt. Ein solcher Zusatz entfällt, wenn nach der Polymerisation eine Kupplung vorgesehen ist.

Art und Menge von Katalysator und Verzweigungsmittel werden vorzugsweise so ausgewählt, daß das erhaltene Blockcopolymerisat folgende Eigenschaften aufweist:

Mooney-Viskosität ($ML_{1-4}$, 100 °C, DIN 53 523): 35 bis 120;

Uneinheitlichkeit U = (Mw/Mn) - 1, bestimmt durch gelpermeationschromtografische Analyse (GPC-Analyse): 0,6 bis 3,0;
Defo-Elastizität(80 °C, DIN 53 514): ≧ 20;
Bei dem vorliegenden Verfahren wird der Block B in Anwesenheit eines Cokatalysators hergestellt.

Der Block B soll Polymerisate mit einem möglichst hohen Anteil von 1,2- und/oder 3,4-Struktureinheiten enthalten.

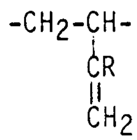
und/oder
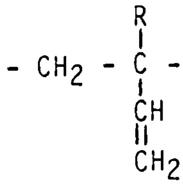

R = H (Butadien)
R = $CH_3$ (Isopren)
Die Auswahl der Cokatalysatoren richtet sich daher nach ihrer Fähigkeit, die Mikrostruktur zu regeln, d. h. den Verlauf der Polymerisation im Hinblick auf eine möglichst vollständige Bildung von 1,2- und/oder 3,4-Struktureinheiten zu lenken.

Der Cokatalysator wird im allgemeinen aus der Gruppe

- der Ether,
- der tertiären Amine oder
- der etherhaltigen tertiären Amine

ausgewählt. Selbstverständlich können auch Gemische verschiedener Cokatalysatoren eingesetzt werden.

Geeignete Ether umfassen insbesondere symetrische und unsymetrische Dialkylether des Ethylenglykols und Diethylenglykols, deren Alkylgruppen jeweils bis zu 4 C-Atome aufweisen, wie Ethylenglykoldiethylether (DEE).

Geeignete tertiäre Amine sind z. B. N,N,N′,N′-Tetramethylethylendiamin, N,N,N′,N′-Tetraethylethylendiamin und Triethylendiamin.

Geeignete etherhaltige Amine sind N-Methylmorpholin und N-Ethylmorpholin.

Der Cokatalysator wird in einem Verhältnis von 2 : 1 bis 30 : 1, insbesondere 2 : 1 bis 15 : 1, bezogen auf die Molzahl des Katalysators eingesetzt. Bei höheren Temperaturen werden im allgemeinen größere Mengen an Cokatalysator benötigt, um die gewünschte Mikrostrukturregelung zu erzielen. Reaktionstemperaturen von 100 °C sollten nicht überschritten werden. Es ist auch möglich, bei steigender oder fallender Temperatur zu arbeiten; jedoch ist in diesem Falle dafür Sorge zu tragen, daß die Mikrostruktur nicht grundsätzlich verändert wird.

Bei der Herstellung des Blockes A hängt es von dem gewünschten Vinylgruppengehalt ab, wieviel Cokatalysator zugegen sein sollte.

Bei der Herstellung der AB-Blockcopolymeren ist dafür Sorge zu tragen, daß der Gehalt an Polystyrolblöcken 3 Massen-% nicht überschreitet. Ein Verfahren zur Bestimmung des Gehaltes an Polystyrolblöcken ist in dem Standardwerk Houben-Weyl "Methoden der Organischen Chemie", Band 14/1 (1061), Seite 698 angegeben.

Es ist bekannt, daß einige als Cokatalysatoren vorgeschlagene Verbindungen die Eigenschaft haben, die Ausbildung von Polystyrolblöcken zu unterdrücken. Die gleiche Eigenschaft haben Verbindungen, die als Randomizer bezeichnet werden und meist Kaliumsalze von Alkoholen sowie organischen Carbon- und Sulfonsäuren sind.

Gemäß einer besonderen Ausführungsform des Verfahrens können die nach Abschluß der Polymerisation vorliegenden "lebenden Polymere" mit einem Kupplungsmittel zu verzweigten oder sternförmigen Blockcopolymerisaten umgesetzt werden.

Geeignete Kupplungsmittel sind Polyepoxide wie epoxidiertes Leinsamenöl, Polyisocyanate, Polyketone wie 1,3,6-Hexantrion, Polyanhydride wie beispielsweise das Dianhydrid der Pyromellithsäure und Dicarbonsäureester wie Adipinsäuredimethylester. Besonders geeignet sind

- die Tetrahalogenide der Elemente Si, Ge, Sn und Pb, insbesondere $SiCl_4$,
- organische Verbindungen der allgemeinen Formel $R_n/SiHal_3/_n$, mit n = 1 bis 6, insbesondere n = 1 und 2. Hierbei ist R ein n-wertiger organischer Rest, beispielsweise ein aliphatischer, cycloaliphatischer oder aromatischer Rest mit 6 bis 16 C-Atomen. Beispielhaft seien 1,2,4-Tris(2-trichlorsilylethyl)-cyclohexan, 1,8-Bis(trichlorsilyl)-octan und 1-(Trichlorsilyl)-octan genannt.

- organische Verbindungen, die mindestens einmal die Gruppierung > $SiHal_2$ enthalten, wie z. B. Dimethylsilylchlorid.
- Halogensilanwasserstoffe der allgemeinen Formel $Si(H)_m(Hal)_{4-m}$ mit $3 \geqq m \geqq 1$.
- Di- und Trivinylbenzole, wie z. B. 1,4-Divinylbenzol.

Es hat sich als zweckmäßig erwiesen, als Kupplungsmittel Divinylbenzol zu verwenden.

Das Verfahren kann sowohl diskontinuierlich wie kontinuierlich betrieben werden.

Mit Hilfe der Dämpfungskurve ist der Fachmann in der Lage, durch Variation der Reaktionsbedingungen Blockcopolymerisate herzustellen, die zu Reifenlaufflächen mit den gewünschten Eigenschaftskombinationen verarbeitet werden können.

Die erhaltenen amorphen Polymerisate werden, wenn sie zu Vulkanisaten verarbeitet werden sollen, mit aktiven, verstärkenden Füllstoffen, einem Vulkanisationsmittel und üblichen Zusatzstoffen gemischt. Im allgemeinen ist es erforderlich, diese Vermischung unter Einwirkung von Scherkräften durchzuführen.

Massen, welche zur Herstellung von Reifenlaufflächen bestimmt sind, werden im allgemeinen zu Rohlaufstreifen geformt. Bei der Homogenisierung und Formgebung, die beispielsweise in einem Extruder erfolgen kann, werden die Bedingungen von Temperatur und Zeit so gewählt, daß keine Vulkanisation eintritt.

Die Kautschukkomponente in den vulkanisierbaren Massen besteht vorzugsweise zu mehr als 20 und insbesondere zu 100 Massen-% aus einem Blockcopolymerisat der Erfindung und zu 0 bis 80 Massen-% aus einem bekannten, amorphen Allzweckkautschuk wie z. B. Styrol-Butadien-Kautschuk, 1,4-cis-Polybutadien, 1,4-cis-Polyisopren und Naturkautschuk.

Aktive, verstärkende Füllstoffe sind beispielsweise Reifenlaufflächenruße unterschiedlicher Aktivität, gegebenenfalls mit Silan-Haftvermittlern behandelte, hochdisperse Kieselsäuren und ihre Gemische.

Übliche Vulkanisationsmittel enthalten z. B. Schwefel in Kombination mit Beschleunigern. Die Menge des Vulkanisationsmittels richtet sich nach den übrigen Komponenten in der vulkanisierbaren Masse und kann durch einfache, orientierende Versuche ermittelt werden.

Als Zusatzstoff können die in der Kautschuktechnik üblichen Weichmacheröle, bevorzugt aromatische, aliphatische und naphthenische Kohlenwasserstoffe, sowie übliche Hilfsmittel, wie beispielsweise Zinkoxid, Stearinsäue, Harzsäuren, Alterungsschutzmittel und Ozonschutzwachse, in üblichen Mengen zugesetzt werden.

Die erfindungsgemäßen Blockcopolymerisate eignen sich zur Herstellung der Laufflächen von PKW- und LKW-Reifen und zwar sowohl zur Herstellung von Neureifen als auch zur Runderneuerung von Altreifen.

Die Reifenlaufflächen zeichnen sich insbesondere durch folgende vorteilhafte Eigenschaften aus:

- hoher Naßrutschwiderstand
- hoher Abriebwiderstand
- niedriger Rollwiderstand und daher geringer Treibstoffverbrauch
- hohe Verschleißfestigkeit
- Allwettereigenschaften

Als Lösemittel wurde ein Kohlenwasserstoffgemisch eingesetzt, das zu etwa 50 % aus Hexan bestand. Weitere Bestandteile dieses hydrierten $C_6$-Schnittes waren insbesondere Pentan, Heptan und Oktan sowie deren Isomere. Das Lösemitel wurde über einem Molekularsieb der Porenweite 0,4 nm getrocknet, so daß der Wasseranteil unter 10 ppm gesenkt wurde, und anschließend mit $N_2$ gestrippt.

Die organische Lithiumverbindung war n-Butyllithium, die, wenn nicht anders angegeben, in Form einer 15 Gew.-prozentigen Lösung in Hexan zur Anwendung kam.

Die Monomeren Isopren und Styrol wurden vor ihrem Einsatz vom Stabilisator abdestilliert und mit n-Butyllithium in Gegenwart von o-Phenanthrolin austitriert.

Die Glykolether wurden über Molekularsieb getrocknet und anschließend mit n-Butyllithium in Gegenwart von o-Phenanthrolin austitriert.

Das Divinylbenzol (DVB) stellt ein Gemisch des m- und p-Divinylbenzols dar und wurde in Form einer 64prozentigen Lösung in Hexan eingesetzt. Die Bestimmung des Umsatzes erfolgte, indem man den Feststoffgehalt nach Abdampfen des Lösemittels und der Monomeren bestimmte.

Die Dämpfungskurven wurden mit einem Torsionspendel nach Schmieder-Wolf gemäß DIN 53 445 aufgenommen.

Die Bestimmung der Mikrostruktur erfolgte IR-spektroskopisch.

Als Kupplungsausbeute wird der Prozentanteil an Kautschuk angesehen, der nach der Umsetzung mit einem Kupplungsmittel eine sternförmige Struktur aufweist und sich gegenüber dem ungekuppelten Kautschuk durch ein erheblich höheres Molekulargewicht auszeichnet. Die Bestimmung erfolgt mit der GPC-Analyse, wobei Tetrahydrofuran als Lösemittel und Polystyrol als Säulenmaterial eingesetzt wird. Die

Polymerisate werden mit einem Lichtstreuungsdetektor charakterisiert. Zu diesem Zweck werden dem Reaktor vor Zugabe des Kupplungsmittels und zu Ende der Reaktion Proben entnommen. Die Defo-Härte (DH) und die Defo-Elastizität (DE) wurden nach den üblichen Meßmethoden bestimmt (DIN 53 514).

Teile bedeuten Massenteile, Prozent (%) Massen-%.

Beispiel 1

In einem mit trockenem Stickstoff gespülten V2A-Rührautoklaven wurden 680 Teile Hexan (technischer $C_6$-Schnitt), 67 Teile 1,3-Butadien, 26 Teile Isopren und 7 Teile Styrol vorgelegt und unter thermoelektrischer Kontrolle mit n-Butyllithium (BuLi) titriert. Die Polymerisation wurde bei 50 °C durch Zugabe von 0,038 Teilen n-BuLi gestartet und durch Kühlung nahezu konstant gehalten. Nach 33 Minuten wurde eine Probe gezogen, aus der der Umsatz mit 54 % bestimmt und deren Mikrostruktur gemessen wurde (Block A).

Unmittelbar danach wurde 1,0 Teil 1,2-Diethoxyethan zugegeben. Die Temperatur stieg auf 58 °C an. Nach 2,5 Stunden war die Polymerisation vollständig. Es wurde eine Lösung von 0,5 Teilen 2,2′-Methylen-bis-(4-methyl-6-tert.-butylphenol) in 2 Teilen feuchtem Toluol zugesetzt. Das Lösemittel wurde mit Wasserdampf abdestilliert, und das Polymerisat 24 Stunden bei 70 °C im Umlufttrockenschrank getrocknet.

Beispiele 2 bis 6

Die Versuchsdurchführung entsprach weitgehend Beispiel 1.
Die veränderten Einsatzmengen und Reaktionsparameter sind Tabelle 1 zu entnehmen.

Vergleichsbeispiele A, B und C

Bei diesen Vergleichsbeispielen wurden als Monomere nur Butadien und Styrol eingesetzt. Das Verfahren der Polymerisation entspricht grundsätzlich Beispiel 1. Die experimentellen Einzelheiten sind den Tabellen 1 und 2, die Eigenschaften der erhaltenen Kautschuke den Tabellen 3 und 4 zu entnehmen.
Vergleichsbeispiel B entspricht Beispiel K der DE-PS 31 51 139.
Vergleichsbeispiel C entspricht Beispiel 2 der DE-OS 32 20 680.

Man entnimmt diesen Tabellen, daß sich die erfindungsgemäßen AB-Blockcopolymerisate insbesondere durch einen niedrigeren Abrieb sowie durch ein günstigeres Verhältnis von Rutschfestigkeit zu Rollwiderstand (erkennbar an den Werten der Rückprallelastizität bei 22 °C und bei 75 °C) auszeichnen.

Tabelle 1:

| Beispiel | 2 | 3 | 4 | 5 | 6 | A | B | C |
|---|---|---|---|---|---|---|---|---|
| Vorlage zu Block A | | | | | | | | |
| Teile Hexan | 470 | 470 | 470 | 470 | 470 | 560 | 280[1)] | 280[1)] |
| Teile Butadien | 40 | 50 | 26 | 50 | 50 | 77 | 50 | 33,4 |
| Teile Isopren | 36 | 42 | 50 | 34 | 34 | - | - | - |
| Teile Styrol | 24 | 8 | 24 | 16 | 16 | 23 | - | - |
| Teile DVB | 0,025 | 0,002 | 0,025 | 0,02 | 0,02 | 0,015 | 0,010 | - |
| Start mit | | | | | | | | |
| Teilen BuLi | 0,034 | 0,04 | 0,042 | 0,04 | 0,042 | 0,044 | 0,045 | 0,056 |
| bei d. Temp. (°C) | 49 | 50 | 49 | 51 | 50 | 50 | 50 | 50 |
| Start von Block B | | | | | | | | |
| nach Minuten | 25 | 138 | 65 | 145 | 110 | 50 | 150 | 136 |
| Umsatz (%) *) | 56 | 70 | 50 | 70 | 60 | 39 | 100 | 99 |
| durch Zugabe von | | | | | | | | |
| Teilen Cokatalysator[2)] | 0,75 | 0,75 | 0,75 | 0,75 | 0,75 | 0,75 | 0,75[4)] | 0,4[4)] |
| und Teilen Butadien/ | - | - | - | - | - | - | 30/20[3)] | 43,2/23,4[5)] |
| Styrol | | | | | | | | |
| Ende der Polymerisation | | | | | | | | |
| nach Stunden | 1,5 | 3 | 2,5 | 3,5 | 3 | 2,5 | 4,5 | 2,5[6)] |
| bei d. Temp. (°C) | 66 | 53 | 56 | 53 | 60 | 56 | 51 | 51 |

*) Prozentanteil der eingesetzten Monomeren, der als Polymer vorliegt

[1] Die Vorlage zu Block A enthält zusätzlich 0,012 Teile 1-Ethoxy-2-t.Butoxyethan (BEE) als Cokatalysator.

[2] Als Cokatalysator wurde BEE eingesetzt.

[3] Die Mischung aus 30 Teilen Butadien und 20 Teilen Styrol wurde in Form einer Lösung in 200 Teilen Hexan zugesetzt.

[4] Zusätzlich zum Cokatalysator wurde 0,1 Teil Natriumalkylbenzolsulfat (Molare Masse 346) eingesetzt.

[5] Die Mischung aus 43,2 Teilen Butadien und 23,4 Teilen Styrol wurde in einer Lösung in 200 Teilen Hexan zugesetzt.

[6] Nach Ende der Polymerisation wurde 8,1 g $SnCl_4$ zugesetzt und 60 Minuten bei 60 °C gehalten.

Tabelle 2: Prozentanteil der Strukturelemente, die durch Polymerisation der folgenden Monomeren erhalten wurden.

| | Butadien | | | Isopren | | Styrol |
|---|---|---|---|---|---|---|
| | trans 1,4 | 1,2*) | cis 1,4 | 3,4 | 1,4 | |
| Beispiel 1 | | | | | | |
| A | 48 | 13 | 29 | 2 | 7 | 1 |
| AB | 24 | 30 | 15 | 19 | 4 | 8 |
| Beispiel 2 | | | | | | |
| A | 37 | 10 | 21 | 5 | 20 | 7 |
| AB | 25 | 19 | 18 | 10 | 3 | 25 |
| Beispiel 3 | | | | | | |
| A | 34 | 17 | 19 | 11 | 15 | 4 |
| AB | 25 | 17 | 15 | 22 | 11 | 10 |
| Beispiel 4 | | | | | | |
| A | 29 | 6 | 12 | 6 | 39 | 8 |
| AB | 17 | 7 | 9 | 19 | 21 | 27 |
| Beispiel 5 | | | | | | |
| A | 41 | 13 | 23 | 5 | 14 | 5 |
| AB | 26 | 14 | 16 | 16 | 10 | 18 |
| Beispiel 6 | | | | | | |
| A | 43 | 12 | 27 | 4 | 10 | 4 |
| AB | 23 | 18 | 14 | 20 | 7 | 18 |

| | Butadien trans 1,4 | 1,2*) | cis 1,4 | Isopren 3,4 | 1,4 | Styrol |
|---|---|---|---|---|---|---|
| Vergl. Beispiel A | | | | | | |
| A | 50 | 16 | 32 | 0 | 0 | 2 |
| AB | 23 | 39 | 14 | 0 | 0 | 24 |
| Vergl. Beispiel B | | | | | | |
| A | 43 | 29 | 28 | 0 | 0 | 0 |
| AB | 25 | 37 | 17 | 0 | 0 | 21 |
| Vergl. Beispiel C | | | | | | |
| A | 40 | 21 | 29 | 0 | 0 | 0 |
| AB | 21 | 40 | 14 | 0 | 0 | 25 |

*) einscnl. Isopren-1,2

Tabelle 3

| Charakterisierung der AB-Blockcopolymeren | | | | | | | | | | |
|---|---|---|---|---|---|---|---|---|---|---|
| Beispiel | | 1 | 2 | 3 | 4 | 5 | 6 | A | B | C |
| Block | A (%)<br>B (%)[1]) | 54<br>46 | 56<br>44 | 70<br>30 | 50<br>50 | 70<br>30 | 60<br>40 | 39<br>61 | 50<br>50 | 33,4<br>66,6 |
| Mooney-Viskosität | | 54 | 87 | 92 | 61 | 80 | 58 | 65 | 62 | 45 |
| DE | | - | 32 | 28 | 22 | 25 | 20 | 24 | 24 | 21 |
| Blockstyrol (%) | | | 1,8 | | 1,6 | 0,95 | | | 1,7 | |

[1]) berechnet

Beispiel 7:

In einem mit trockenem Stickstoff gespülten V2A-Autoklaven wurden 654 Teile Hexan und ein Monomerengemisch aus 50 Teilen Butadien, 26 Teilen Isopren und 24 Teilen Styrol vorgelegt. Dann wurde auf 50 °C erhitzt und mit einer 5 %igen Lösung von n-Butyllithium in Hexan unter thermoelektrischer Kontrolle titriert. Die Polymerisation wurde bei 50 °C durch Zugabe von 0,069 Teilen n-Butyllithium gestartet. Die Temperatur wurde durch Kühlung konstant gehalten. Nachdem 51 % des vorgelegten Monomerengemischs umgesetzt waren, wurden 1,0 Teile 1-Ethoxy-2-tert.-butoxy-ethan zudosiert und der Ansatz 70 Minuten bei 50 °C gehalten.

Anschließend wurde eine Probe gezogen und vollständiger Umsatz festgestellt. Danach wurden bei 50 °C, 1,4 Teile DVB zugesetzt. Nach einer Stunde bei 50 °C wurde auf Raumtempratur abgekühlt und 0,5 Teile 2,2'-Methylen-bis-(4-methyl-6-tert.-butylphenol) zugesetzt. Der erhaltene Kautschuk wurde mit einem Gemisch aus Isopropanol und Methanol im Volumenverhältnis 80 : 20 gefällt und 24 Stunden bei 70 °C im Umluftschrank getrocknet.

Die Auswertung der GPC-Analyse ergab, daß 75 % des Polymeren gekoppelt vorliegen. Das Molekulargewicht der gekoppelten Produkte ist 8-mal so groß wie das der ungekoppelten Produkte.

| Zusammensetzung des Polymerisats in %: | | | | | |
|---|---|---|---|---|---|
| Butadien | | | Isopren | | Styrol |
| trans-1,4 | 1,2 | cis-1,4 | 3,4 | 1,4 | |
| 24 | 12 | 15 | 11 | 12 | 26 |

Tabelle 4: Kautschukeigenschaften

| | Beispiel 2 | Beispiel 5 | Beispiel 6 | Vergleichsbeispiel A | Vergleichsbeispiel B | Vergleichsbeispiel C |
|---|---|---|---|---|---|---|
| ML 1) | 84 | 93 | 72 | | 75 | 59 |
| Defo 2) | 1700/18 | 1900/15 | 1200/12 | | 1700/12 | 1025/7 |
| $t_{10}$ 3) | 9,4 | 10 | 10,5 | 13,7 | 11,3 | 10,7 |
| $t_{90}$ 3) | 14,5 | 15,4 | 16,3 | 22,9 | 28,0 | 19,3 |
| F 4) | 17,8 | 17,3 | 16,0 | 15,6 | 15,7 | 15,5 |
| D 5) | 482 | 445 | 462 | 401 | 451 | 432 |
| $M_{100}$ 6) | 2,8 | 2,7 | 2,1 | 2,7 | 2,7 | 2,0 |
| $M_{300}$ 6) | 10,6 | 10,9 | 9,3 | 11,5 | 10,0 | 9,2 |
| H 22° 7) | 73 | 72 | 67 | 72 | 72 | 65 |
| H 75° 7) | 59 | 66 | 57 | 58 | 56 | 55 |
| E -20° 8) | 23 | | 15 | 13 | 19 | 19 |
| 0° 8) | 19 | | 10 | 12 | 18 | 9 |
| 22° 8) | 14 | 16 | 23 | 29 | 20 | 20 |
| 75° 8) | 51 | 55 | 58 | 50 | 48 | 46 |
| Abrieb 9) | 152 | 124 | 134 | 169 | 163 | 153 |

Erläuterungen zu Tabelle 4

1) Mooney Viskosität ($ML_{1+4}$, 100 °C, DIN 53 523)

2) Defo-Härte gemäß DIN 53 514

Defo-Elastizität gemäß DIN 53 514

3) Vulkametrie gemäß DIN 53 529 in Minuten

4) Zugfestigkeit in MPa gemäß DIN 53 504

5) Reißdehnung in % gemäß DIN 53 504

6) Spannungswert (MPa) bei 100 bzw. 300 % Dehnung gemäß DIN 53 504

7) Härte (Shore A) gemäß DIN 53 505 in % bei dem jeweils angegebenen Winkel

8) Rückprallelastizität gemäß DIN 53 512 in % bei der jeweils angegebenen Temperatur

9) Abrieb gemäß DIN 53 516 in $mm^3$

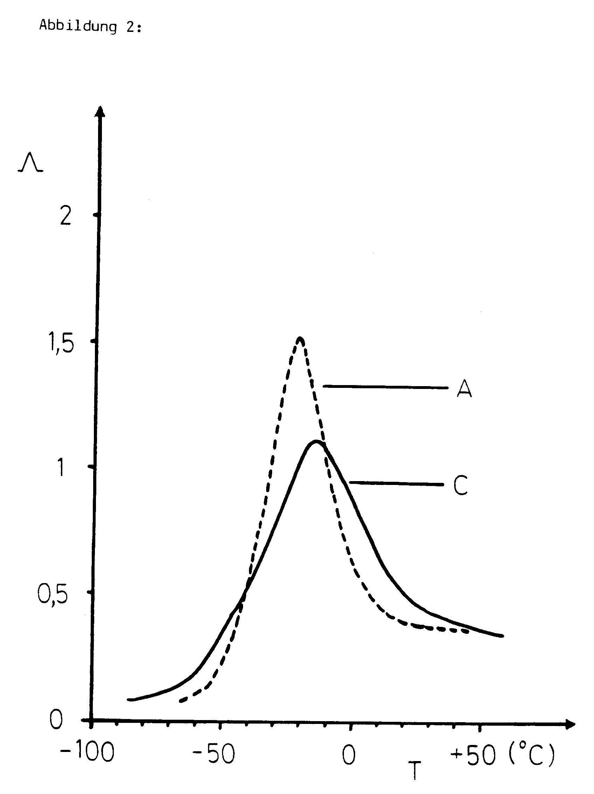

## Patentansprüche

1. Ungesättigte, elastomere AB-Blockcopolymerisate auf Basis von
20 bis 75 % Butadien-1,3,
5 bis 50 % Isopren und
3 bis 30 % Styrol,
die weniger als 3 % Styrolblöcke enthalten, wobei jeder der beiden Blöcke Einheiten aller drei Monomeren enthält, und zu
30 bis 90 % aus einem Block A, und zu
70 bis 10 % aus einem Block B bestehen, dessen mittlerer Vinyl- und Isopropenylgruppengehalt jeweils um mindestens 30 % höher ist als der des Blockes A.

2. AB-Blockcopolymerisate gemäß Anspruch 1,
dadurch gekennzeichnet,
daß der mittlere Vinyl- und Isopropenylgruppengehalt des Blockes B um mindestens 45 % höher ist als der des Blockes A.

3. AB-Blockcopolymerisate gemäß Anspruch 1,
dadurch gekennzeichnet,
daß das Blockcopolymerisat
zu 40 bis 80 % aus dem Block A und
zu 60 bis 20 % aus dem Block B
besteht.

4. AB-Blockcopolymerisate gemäß den Ansprüchen 1 bis 3,
dadurch gekennzeichnet,
daß der Anteil der Vinyl- und Isopropenylgruppen im Block A 10 bis 30 % beträgt.

5. AB-Blockcopolymerisate gemäß den Ansprüchen 1 bis 4,
dadurch gekennzeichnet,
daß die Blockcopolymerisate mit Verzweigungs- oder Kupplungsmitteln verzweigt sind.

6. Verfahren zur Herstellung der AB-Blockcopolymerisate gemäß den Ansprüchen 1 bis 5 durch anionische Polymerisation der Monomeren in einem inerten organischen Lösemittel in Gegenwart einer Li-organischen Verbindung, dadurch gekennzeichnet,
daß man

a) zunächst einen Block A herstellt, indem man die angegebene Monomerzusammensetzung, gegebenenfalls in Gegenwart einer geringen Menge Cokatalysator, polymerisiert und
b) dann einen Block B herstellt, indem man einen Cokatalysator zusetzt und die Polymerisation zu Ende führt.

**7.** Verfahren nach Anspruch 6,
dadurch gekennzeichnet,
daß man als Cokatalysatoren Dialkylglykolether einsetzt.

**8.** Verfahren nach den Ansprüchen 6 bis 7,
dadurch gekennzeichnet,
daß man die nach vollständiger Polymerisation erhaltenen Polymeren mit einem Kupplungsmittel umsetzt.

**9.** Verfahren nach den Ansprüchen 6 bis 7,
dadurch gekennzeichnet,
daß man wenigstens einen der Verfahrensschritte der Polymerisation in Gegenwart von Divinylbenzol durchführt.

**10.** Verwendung der AB-Blockcopolymerisate gemäß den Ansprüchen 1 bis 5 zur Herstellung von Reifenlaufflächen.

## Claims

**1.** An unsaturated elastomeric AB block copolymer based on
from 20 to 75% of 1,3-butadiene,
from 5 to 50% of isoprene and
from 3 to 30% of styrene,
which contains less than 3% of styrene blocks, each of the two blocks containing units of all three monomers, and is composed of
from 30 to 90% of a block A and
from 70 to 10% of a block B, the average vinyl and isopropenyl group content of which is in each case at least 30% higher than that of block A.

**2.** An AB block copolymer according to claim 1, characterized in that the average vinyl and isopropenyl group content of block B is at least 45% higher than that of block A.

**3.** An AB block copolymer according to claim 1, characterized in that the block copolymer is composed of
from 40 to 80% of block A and
from 60 to 20% of block B.

**4.** An AB block copolymer according to any of claims 1 to 3, characterized in that the proportion of vinyl and isopropenyl groups in block A is from 10 to 30%.

**5.** An AB block copolymer according to any of claims 1 to 4, characterized in that the block copolymer is branched by means of branching or coupling agents.

**6.** A process for preparing the AB block copolymer according to any of claims 1 to 5 by anionic polymerization of the monomers in an inert organic solvent in the presence of an organolithium compound,
characterized in that

a) a block A is first prepared by polymerizing the specified monomer composition, if desired in the presence of a small amount of cocatalyst, and
b) a block B is then prepared by adding a cocatalyst and polymerizing to completion.

**7.** A process according to claim 6, characterized in that dialkyl glycol ethers are used as cocatalyst.

8. A process according to claims 6 or 7, characterized in that the polymer obtained after the polymerization is complete is reacted with a coupling agent.

9. A process according to claims 6 or 7, characterized in that at least one of the process steps of the polymerization is carried out in the presence of divinylbenzene.

10. The use of an AB block copolymer according to any of claims 1 to 5 for the production of tyre treads.

**Revendications**

1. Produits élastomères, insaturés, de copolymérisation en bloc AB, à base
de 20 à 75 % de butadiène-(1,3),
de 5 à 50 % d'isoprène et
de 3 à 30 % de styrène,
qui renferment moins de 3 % de blocs de styrène, chacun des deux blocs renfermant des unités de la totalité des trois monomères, et qui sont constitués pour
30 à 90 % par un bloc A, et pour
70 à 10 % par un bloc B, dont la teneur moyenne en groupes vinyle et isopropényle est chaque fois supérieure de 30 % au moins à celle du bloc A.

2. Les produits AB de copolymérisation en bloc selon la revendication 1,
caractérisés en ce que la teneur moyenne en groupes vinyle et isopropényle du bloc B est supérieure de 45 % au moins à celle du bloc A.

3. Les produits AB de copolymérisation en bloc selon la revendication 1,
caractérisés en ce que le produit de copolymérisation en bloc est constitué pour
40 à 80 % par le bloc A et pour
60 à 20 % par le bloc B.

4. Les produits AB de copolymérisation en bloc selon les revendications 1 à 3,
caractérisés en ce que la fraction des groupes vinyle et isopropényle dans le bloc A est de 10 à 30 %.

5. Les produits AB de copolymérisation en bloc selon les revendications 1 à 4,
caractérisés en ce que les produits de copolymérisation en bloc sont ramifiés par des agents de ramification ou de copulation.

6. Procédé de préparation des produits AB de copolymérisation en bloc selon les revendications 1 à 5, par polymérisation anionique des monomères dans un solvant organique inerte, en présence d'un composé organique du lithium,
caractérisé en ce que :
a) on prépare d'abord un bloc A en polymérisant la composition indiquée de monomères, le cas échéant en présence d'une faible quantité de co-catalyseur et que :
b) on prépare ensuite un bloc B en ajoutant un co-catalyseur et en conduisant la polymérisation jusqu'à sa fin.

7. Procédé selon la revendication 6,
caractérisé par le fait que l'on utilise, comme co-catalyseurs, des éthers de dialkyl-glycols.

8. Procédé selon les revendications 6 à 7,
caractérisé en ce que l'on fait réagir sur un agent de copulation les polymères obtenus après polymérisation complète.

9. Procédé selon les revendications 6 à 7,
caractérisé en ce que l'on effectue en présence de divinylbenzène l'une au moins des phases opératoires de la polymérisation.

10. L'utilisation des produits AB de copolymérisation en blocs selon les revendications 1 à 5 pour la fabrication de surfaces de roulement pour pneumatiques.

Abbildung 1:

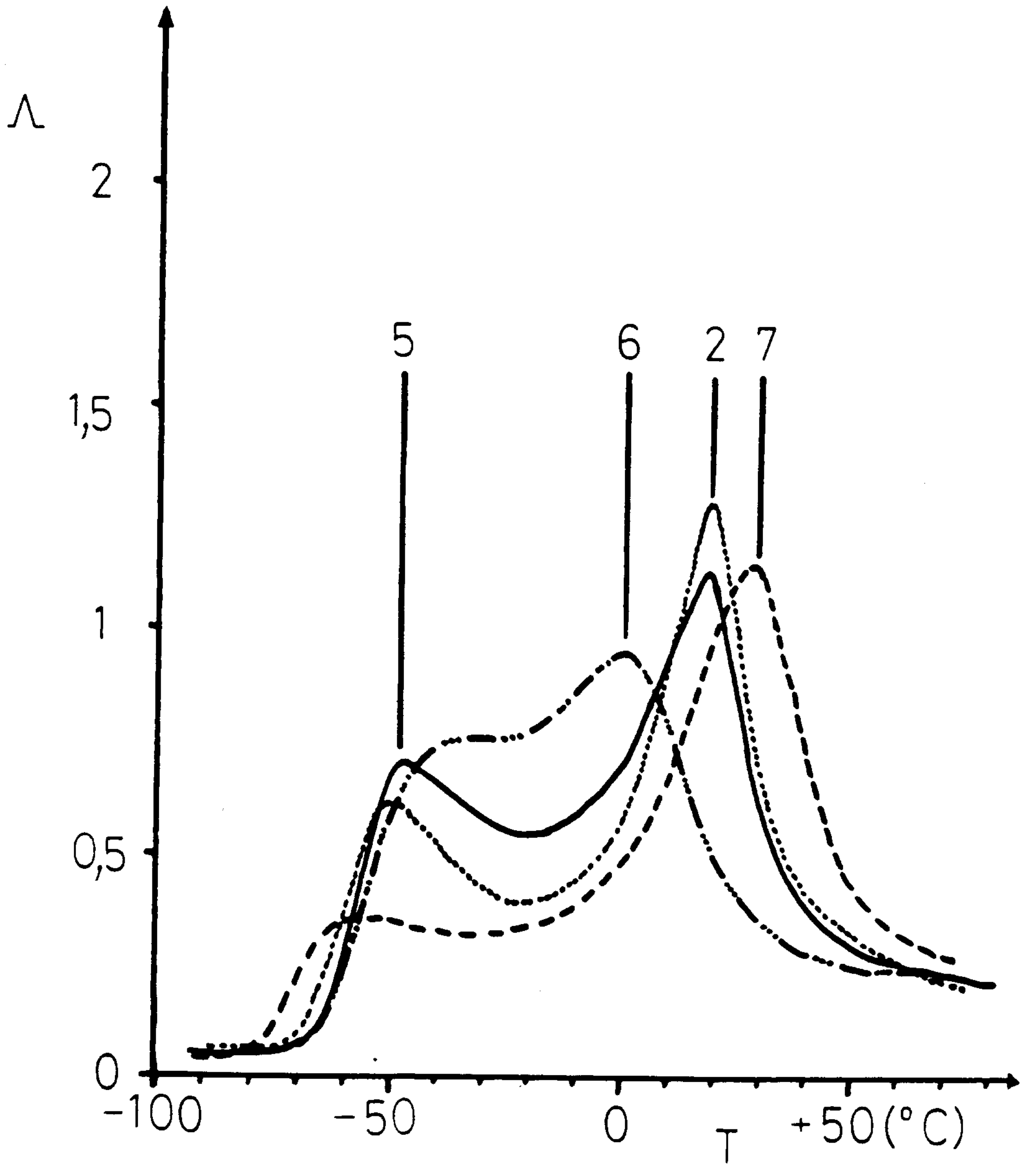

Abbildung 2: